(19) Europäisches Patentamt
European Patent Office
Office européen des brevets

(11) EP 4 159 483 B1

(12) **EUROPEAN PATENT SPECIFICATION**

(45) Date of publication and mention of the grant of the patent:
**10.04.2024 Bulletin 2024/15**

(21) Application number: **22208645.6**

(22) Date of filing: **30.11.2021**

(51) International Patent Classification (IPC):
***B60C 11/03*** *(2006.01)* ***C08L 21/00*** *(2006.01)*
***B60C 11/00*** *(2006.01)*

(52) Cooperative Patent Classification (CPC):
(C-Sets available)
**B60C 11/033;** B60C 11/0306; B60C 2011/0016;
B60C 2011/0025; B60C 2011/0341;
B60C 2011/0355; B60C 2200/14; Y02T 10/86

(Cont.)

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2020 JP 2020199840**
**02.11.2021 JP 2021179498**

(43) Date of publication of application:
**05.04.2023 Bulletin 2023/14**

(62) Document number(s) of the earlier application(s) in accordance with Art. 76 EPC:
**21211410.2 / 4 008 569**

(73) Proprietor: **Sumitomo Rubber Industries, Ltd.**
**Kobe-shi, Hyogo 651-0072 (JP)**

(72) Inventor: **KITAMURA, Naoya**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 730 434 US-A1- 2006 231 181**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets

**C08L 9/06, C08L 9/00, C08L 7/00, C08L 83/08, C08L 91/06, C08L 45/00, C08K 3/04, C08K 3/36, C08K 5/18, C08K 5/09, C08K 3/22, C08K 3/06, C08K 5/47, C08K 5/31, C08K 5/39**

## Description

TECHNICAL FIELD

The present invention relates to a tire, particularly a tire having an excellent off-road running performance.

BACKGROUND OF THE INVENTION

A tire that runs in a harsh area has been required to have a high durability, and in particular, highly required to have chipping resistance. Until now, chipping resistance has been evaluated by a tensile test at a room temperature using elongation at break EB (%), etc. as an index (JP 2007-56137 A). US 2006/0231181 A1 discloses: a rubber compound for a tread cap, wherein the rubber component contains 20%-40% by mass of polyisoprene; a rubber compound for a tread cap which has a tan delta 10% at 90°C of 0.22-0.27, an elongation of 400-500% at 23°C, and an elongation of 300-350% at 100°C; and a truck racing tire having a tread which comprises two circumferential grooves dividing the tread into an intermediate rib and a pair of shoulder ribs.

SUMMARY OF THE INVENTION

However, off-road running performance is important for running in a harsh area, and it cannot be evaluated only by elongation at break EB (%), etc. which is a physical property of a tire rubber. Moreover, a tire used in a harsh area has been also required to have fuel efficiency and abrasion resistance, though off-road running performance has a trade-off relationship with fuel efficiency and abrasion resistance.

It is an object of the present invention to provide a tire that exhibits an excellent off-road running performance and can achieve both fuel efficiency and abrasion resistance.

As a result of intensive studies, the present inventor has found that the above-described problems can be solved by, in a tire comprising a tread formed of a predetermined rubber composition, on top of setting a physical property of the rubber composition of the tread into predetermined one and setting a tread pattern into one having a predetermined characteristics, adjusting the physical property and the characteristics of the tread pattern so as to have a certain relationship, and conducted further studies to complete the present invention.

That is, the present invention relates to:

[1] A tire comprising a tread, the tread being formed of a rubber composition comprising a rubber component comprising 0 to 50% by mass of an isoprene-based rubber,

wherein the rubber composition satisfies the following conditions (1) to (3):

(1) when a tan $\delta$ at 30°C (tan $\delta_{30°C}$) is A, $A \geq 0.12$,
(2) when a ratio ($EB_{80°C}/EB_{23°C}$) of an elongation at break at 80°C ($EB_{80°C}$) to an elongation at break at 23°C ($EB_{23°C}$) is B, $0.60 \leq B \leq 1.00$, and
(3) when an abrasion resistance index with a tire of Comparative example 1 being 100 as measured by a LAT tester is C, $110 \leq C \leq 140$,

wherein the tread has a crown part and a pair of shoulder parts, the crown part having a center at a tire equator and having a width of 1/3 of a tread grounding surface width, each of the pair of shoulder parts being located at both sides of the crown part and having a width of 1/3 of the tread grounding surface width, and the crown part and the shoulder parts satisfying the following condition (4):
(4) when a ratio ($LAND_{Sh}/LAND_{Cr}$) of a land ratio of the entire pair of shoulder parts ($LAND_{Sh}$) to a land ratio of the crown part ($LAND_{Cr}$) is D, $0.80 \leq D \leq 2.00$,
wherein the tread has at least one circumferential main groove extending continuously in a tire circumferential direction, the circumferential main groove satisfying the following condition (5):
(5) when a maximum groove depth of the circumferential main groove is E (mm), $5 \leq E \leq 20$, and
wherein the A, the B, the C, the D, and the E satisfy the following inequality (6):
(6)

$$25 \leq (B \times C/A) \times (D/E) \leq 200.$$

EFFECT OF THE INVENTION

The tire of the present invention exhibits an excellent off-road running performance, and can also achieve both fuel efficiency and abrasion resistance.

BRIEF DESCRIPTION OF THE DRAWINGS

FIG. 1 is a development view of a tread pattern for an example of the tire of the present invention.
FIG. 2 is a development view of a tread pattern for an example of the tire of the present invention.
FIG. 3 is a development view of a tread pattern for an example of the tire of the present invention.

DETAILED DESCRIPTION

The tire which is one embodiment of the present invention will be described in detail below. However, the following descriptions are illustrative for explaining the present invention, and are not intended to limit the technical scope of the present invention to this description range only. Besides, in the present specification, a numerical range identified with "to" means to include the numerical values of both ends.

The tire which is one embodiment of the present invention is a tire comprising a tread formed of a rubber composition comprising a rubber component comprising 0 to 50% by mass of an isoprene-based rubber, wherein the rubber composition satisfies the following conditions (1) to (3), wherein the tread has a crown part and a pair of shoulder parts, the crown part having a center at a tire equator and having a width of 1/3 of a tread grounding surface width, each of the pair of shoulder parts being located at both sides of the crown part and having a width of 1/3 of the tread grounding surface width, and the crown part and the shoulder parts satisfying the following condition (4), wherein the tread has at least one circumferential main groove extending continuously in a tire circumferential direction, the circumferential main groove satisfying the following condition (5), and wherein the A, the B, the C, the D, and the E satisfy the following inequality (6):

(1) when a tan $\delta$ at 30°C (tan $\delta_{30°C}$) is A, A≥0.12,
(2) when a ratio ($EB_{80°C}/EB_{23°C}$) of an elongation at break at 80°C ($EB_{80°C}$) to an elongation at break at 23°C ($EB_{23°C}$) is B, 0.60≤B≤1.00, and
(3) when an abrasion resistance index with a tire of Comparative example 1 being 100 as measured by a LAT tester is C, 110≤C≤140,
(4) when a ratio ($LAND_{Sh}/LAND_{Cr}$) of a land ratio of the entire pair of shoulder parts ($LAND_{Sh}$) to a land ratio of the crown part ($LAND_{Cr}$) is D, 0.80≤D≤2.00,
(5) when a maximum groove depth of the circumferential main groove is E (mm), 5≤E≤20, and
(6)

$$25 \leq (B \times C/A) \times (D/E) \leq 200.$$

Although it is not intended to be bound by theory, the tire of the present invention achieves an excellent off-road running performance as well as fuel efficiency and abrasion resistance, and the following is considered as a reason for this achievement. That is, the tire of the present invention requires that, on the premise that each of the A (tan $\delta_{30°C}$), the B ($EB_{80°C}/EB_{23°C}$), the C (abrasion resistance index), the D (LANDsn/LANDcr), and the E (maximum groove depth) is within a predetermined range, a product of a value of "B × C/A" composed of the A to the C relating to the physical property of the rubber composition of the tire and a value of "D/E" composed of the D to the E relating to the tread pattern of the tire further fall within a predetermined range. Accordingly, it is considered that the value of "B × C/A" relating to the physical property of the rubber composition of the tire and the value of "D/E" relating to the tread pattern of the tire mutually regulate each other, thereby, as a result, keeping the both within a given range, and, with such condition, contributing to achieving off-road running performance, fuel efficiency, and abrasion resistance.

The above-described isoprene-based rubber is preferably a natural rubber. Effects of the present invention tend to be further exhibited.

The above-described rubber composition preferably comprises 20 to 70 parts by mass of silica based on 100 parts by mass of the rubber component. The effects of the present invention tend to be further exhibited.

A nitrogen adsorption specific surface area of the above-described silica is preferably 200 $m^2/g$ or more. The effects of the present invention tend to be further exhibited.

The above-described rubber composition preferably comprises 10 to 30 parts by mass of carbon black based on 100 parts by mass of the rubber component. The effects of the present invention tend to be further exhibited.

A nitrogen adsorption specific surface area of the above-described carbon black is preferably 120 to 200 $m^2/g$. The effects of the present invention tend to be further exhibited.

The above-described rubber composition preferably comprises 2 to 20 parts by mass of a silane coupling agent based on 100 parts by mass of silica. The effects of the present invention tend to be further exhibited.

The above-described rubber composition preferably comprises 0.5 to 4.0 parts by mass of a hybrid cross-linking agent based on 100 parts by mass of the rubber component. By comprising a hybrid cross-linking agent, a strong cross-linked chain is formed near a terminal of a polymer, so that chipping resistance tends to be improved.

The D is preferably $0.90<D<1.08$. By setting the value of D in such a range, a difference in rigidity between a crown part on which a large grounding pressure acts and a shoulder part on which a large lateral force acts becomes small, so that a stable running during both straight running and turning running becomes possible, and steering stability on a soft road or hard road tends to improve.

The $LAND_{Sh}$ is preferably 60 to 80. When the rigidity of the shoulder part on which a large lateral force acts is increased, steering stability tends to be improved.

When, of the pair of shoulder parts, a stencil $LAND_{Sh}$ means a land ratio of the shoulder part on one side where a convex marker is provided on an outer surface of a sidewall and a non-stencil $LAND_{Sh}$ means a land ratio of the other shoulder part on the opposite side, it is preferable that the stencil $LAND_{Sh}$<the non-stencil $LAND_{Sh}$. A tire is usually mounted with a stencil side facing outside of a vehicle, though, by making a land ratio of the shoulder part different between the stencil side and the non-stencil side in this way, there is a tendency that both off-road running performance and steering stability are achieved. Besides, the stencil is a symbol indicating manufacturing time, etc., which is attached to one side of a sidewall part of individual tire.

The circumferential main groove is preferably in a zigzag or wavy shape having an amplitude in a tire width direction. When the circumferential main groove is in such a zigzag or wavy shape, the tire can catch a road surface more accurately even on a soft road or a hard road, and steering stability tends to be improved.

The groove depth of the circumferential main groove is preferably a depth corresponding to 50 to 80% of a distance from a point at a tread surface in the circumferential groove part toward inside in a tire radial direction to a tread end. When the groove depth of the circumferential main groove is within such a range, there are tendencies that an abrasion life of the tire is extended and chipping can be suppressed.

[Rubber composition]

The rubber composition of the tread of the tire of the present invention will be described below.

<Rubber component>

The rubber component of the present invention comprises a rubber component comprising 0 to 50% by mass of an isoprene-based rubber from the viewpoint of the effects of the present invention. Moreover, the rubber component of the present invention comprises rubber components other than the isoprene-based rubber, and examples of such rubber component include, for example, a styrene-butadiene rubber (SBR), a butadiene rubber (BR), and the like.

(Isoprene-based rubber)

As an isoprene-based rubber, for example, those common in the tire industry can be used, such as an isoprene rubber (IR) and a natural rubber. Examples of the natural rubber includes a non-modified natural rubber (NR), as well as a modified natural rubber such as an epoxidized natural rubber (ENR), a hydrogenated natural rubber (HNR), a deproteinized natural rubber (DPNR), an ultra pure natural rubber (UPNR), and a grafted natural rubber, and the like. These rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in the rubber component is preferably 1% by mass or more, more preferably 5% by mass or more, further preferably 10% by mass or more, from the viewpoint of the effects of the present invention. Moreover, the content of the isoprene-based rubber is preferably 40% by mass or less, more preferably 30% by mass or less, from the viewpoint of the effects of the present invention.

(SBR)

The SBR is not particularly limited, examples of which include a solution-polymerized SBR (S-SBR), an emulsion-polymerized SBR (E-SBR), modified SBRs thereof (a modified S-SBR, a modified E-SBR), and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR is preferable. A SBR may be used alone, or two or more thereof may be used in combination.

Examples of the S-SBR that can be used in the present embodiments include S-SBRs manufactured and sold by JSR Corporation, Sumitomo Chemical Co., Ltd., Ube Industries, Ltd., Asahi Kasei Corporation, Zeon Corporation, etc.

A styrene content of SBR is preferably 5% by mass or more, more preferably 7% by mass or more, further preferably 10% by mass or more, because the effects of the present invention can be sufficiently obtained. Moreover, the styrene content is preferably 15% by mass or less, more preferably 13% by mass or less, from the viewpoint of a good heat generation. Besides, the styrene content of SBR in the present specification is calculated by $^1$H-NMR measurement.

A vinyl content of SBR is preferably 30 mol% or more, more preferably 33 mol% or more, further preferably 35 mol% or more, from the viewpoint of a good wet grip performance. Moreover, the vinyl content is preferably 45 mol% or less, preferably 42 mol% or less, more preferably 40 mol% or less, from the viewpoint of suppressing heat generation. Besides, in the present specification, the vinyl content of SBR represents a 1,2-bond unit amount of a butadiene part in the SBR, and is measured by infrared absorption spectrometry.

A weight-average molecular weight (Mw) of SBR is preferably 200,000 or more, more preferably 300,000 or more, further preferably 400,000 or more, particularly preferably 500,000 or more, from the viewpoints of abrasion resistance and grip performance, etc. Moreover, the Mw is preferably 2,000,000 or less, more preferably 1,000,000 or less, from the viewpoints of cross-linking uniformity, etc. Besides, the Mw can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

A content of SBR in the rubber component is preferably 10% by mass or more, more preferably 20% by mass or more, further preferably 30% by mass or more, further preferably 40% by mass or more, from the viewpoint of the effects of the present invention. Moreover, the content of SBR is preferably 90% by mass or less, more preferably 80% by mass or less, further preferably 70% by mass or less, further preferably 60% by mass or less, from the viewpoint of suppressing heat generation.

(BR)

A BR is not particularly limited, and those common in the tire industry can be used such as, for example, a BR having a cis 1,4 bond content of less than 50% (a low cis BR), a BR having a cis 1,4 bond content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). Among these BRs, a high cis BR is preferable because it has an excellent abrasion resistance. A BR may be used alone, or two or more thereof may be used in combination.

Examples of the high cis BR include, for example, BR1220 manufactured by Zeon Corporation, BR130B, BR150B, BR150L manufactured by Ube Industries, Ltd., BR730 manufactured by JSR Corporation, and the like. When the high cis BR is compounded, low temperature characteristics and abrasion resistance can be improved. Examples of the rare-earth-based BR include, for example, BUNA-CB25 manufactured by LANXESS, and the like.

Examples of the SPB-containing BR include those in which 1,2-syndiotactic polybutadiene crystal is chemically bonded with BR and dispersed, but not those in which the crystal is simply dispersed in the BR. Examples of such SPB-containing BR include VCR-303, VCR-412, VCR-617 manufactured by Ube Industries, Ltd, and the like.

Examples of modified BRs include those obtained by adding a tin compound after polymerizing 1,3-butadiene by a lithium initiator, and further those in which the terminal of the modified BR molecule has tin-carbon bond (a tin-modified BR), a butadiene rubber (a modified BR for silica) having a condensed alkoxysilane compound at its active terminal, and the like. Examples of such modified BR include, for example, BR1250H (tin-modified) manufactured by Zeon Corporation, a S-modified polymer (modified for silica) manufactured by Sumitomo Chemical Co., Ltd., and the like.

A content of BR in the rubber component is preferably 10% by mass or more, more preferably 20% by mass or more, further preferably 25% by mass or more, further preferably 30% by mass or more, from the viewpoint of the effects of the present invention. Moreover, the content of BR is preferably 60% by mass or less, more preferably 50% by mass or less, further preferably 40% by mass or less, from the viewpoint of chipping resistance.

A cis 1,4 bond content (cis content) of BR is preferably 90% by mass or more, more preferably 93% by mass or more, more preferably 95% by mass or more, from the viewpoints of durability and abrasion resistance. The higher the cis content is, the more regularly the polymer chains are arranged, and therefore it is considered that interaction between the polymers becomes enhanced to improve the rubber strength, and that abrasion resistance during running on a rough road improves.

A weight-average molecular weight (Mw) of BR is preferably 400,000 or more, more preferably 450,000 or more, further preferably 500,000 or more, from the viewpoints of abrasion resistance and grip performance, etc. Moreover, the Mw is preferably 2,000,000 or less, more preferably 1,000,000 or less, from the viewpoints of cross-linking uniformity, etc. Besides, the Mw can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

(Other rubber components)

As the rubber components according to the present invention, rubber components other than the above-described isoprene-based rubbers, SBRs, and BRs may be included. As other rubber components, cross-linkable rubber components commonly used in the tire industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluoro rubber (FKM), an acrylic rubber (ACM), a hydrin rubber, and the like. These other rubber components may be used alone, or two or more thereof may be used in combination.

<Filler>

As a filler, those usually used in the tire industry can be appropriately used. Specific examples of such filler include carbon black, silica, and the like. A filler may be used alone, or two or more thereof may be used in combination.

(Carbon black)

As carbon black, those common in the tire industry can be appropriately used, examples of which include, for example, GPF, FEF, HAF, ISAF, SAF, and the like. These carbon black may be used alone, or two or more thereof may be used in combination.

As carbon black, a small-particle carbon black having a nitrogen adsorption specific surface area of 120 $m^2/g$ or more is preferable. By dispersing the small-particle carbon black near the boundary of each phase of the isoprene-based rubber, SBR, and BR to increase a contact of the carbon black with the SBR, the bond between each phase is strengthened, allowing for a rubber composition to be capable of more effectively absorbing impact that occurs when running in a harsh area. Moreover, it is considered that the use of the small-particle carbon black improves a reinforcing effect on the rubber composition, thereby improving abrasion resistance and chipping resistance.

A nitrogen adsorption specific surface area ($N_2SA$) of the small-particle carbon black is more preferably 125 $m^2/g$ or more, further preferably 130 $m^2/g$ or more, further preferably 135 $m^2/g$ or more, from the viewpoint of abrasion resistance. Moreover, an upper limit of the nitrogen adsorption specific surface area is, but not particularly limited to, preferably 200 $m^2/g$ or less, more preferably 190 $m^2/g$ or less, further preferably 180 $m^2/g$ or less, from the viewpoint of processability. Besides, the nitrogen adsorption specific surface area can be measured according to JIS K 6217-2: "Carbon black for rubber industry-Fundamental characteristics-Part 2: Determination of specific surface area-Nitrogen adsorption methods-Single-point procedures".

A content of carbon black based on 100 parts by mass of the rubber component is preferably 1 part by mass or more, more preferably 5 parts by mass or more, further preferably 10 parts by mass or more, from the viewpoint of abrasion resistance. Moreover, the content of carbon black is preferably 55 parts by mass or less, more preferably 45 parts by mass or less, further preferably 35 parts by mass or less, further preferably 30 parts by mass or less, from the viewpoint of suppressing heat generation.

(Silica)

Examples of silica include, but not particularly limited to, for example, a dry silica (anhydrous silica), a wet silica (hydrous silica), and the like. Among them, a wet silica is preferable since it has many silanol groups. Silica may be used alone, or two or more thereof may be used in combination.

As silica, it is preferable to use a fine particle silica having a nitrogen adsorption specific surface area ($N_2SA$) of 200 $m^2/g$ or more. The fine particle silica is dispersed near the boundary of each phase of the isoprene-based rubber, SBR, and BR to strengthen the bond between each phase, allowing for the rubber composition to be capable of more effectively absorbing impact that occurs when running in a harsh area. Moreover, it is considered that the use of the fine particle silica improves the reinforcing effect on the rubber composition, thereby improving abrasion resistance and chipping resistance. A nitrogen adsorption specific surface area of silica is more preferably more than 200 $m^2/g$, further

preferably 205 $m^2/g$ or more, further preferably 210 $m^2/g$ or more. Moreover, the nitrogen adsorption specific surface area of silica is preferably 500 $m^2/g$ or less, more preferably 300 $m^2/g$ or less, further preferably 250 $m^2/g$ or less, from the viewpoints of fuel efficiency and processability. Besides, the nitrogen adsorption specific surface area of silica in the present specification is a value measured according to ASTM D3037-93.

A content of silica when compounded based on 100 parts by mass of the rubber component is preferably 20 parts by mass or more, more preferably 30 parts by mass or more, further preferably 40 parts by mass or more, further preferably 50 parts by mass or more, from the viewpoints of durability and elongation at break. Moreover, the content of silica is preferably 150 parts by mass or less, more preferably 120 parts by mass or less, further preferably 100 parts by mass or less, further preferably 80 parts by mass or less, further preferably 70 parts by mass or less, from the viewpoint of abrasion resistance.

(Silane coupling agent)

Silica is preferably used in combination with a silane coupling agent. The silane coupling agent is not particularly limited, and silane coupling agents conventionally used in combination with silica in the tire industry can be used, examples of which include, for example, mercapto-based silane coupling agents described below; sulfide-based silane coupling agents such as bis(3-triethoxy silylpropyl) disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycydoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among them, it is preferable to comprise sulfide-based silane coupling agents and/or mercapto-based silane coupling agents, and it is more preferable to comprise mercapto-based silane coupling agents. These silane coupling agents may be used alone, or two or more thereof may be used in combination.

It is preferable that the mercapto-based silane coupling agent is a compound represented by the following chemical formula (1) and/or a compound comprising a bond unit A represented by the following chemical formula (2) and a bond unit B represented by the following chemical formula (3).

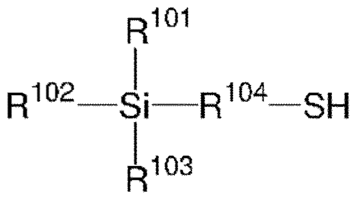

(1)

(wherein, $R^{101}$, $R^{102}$, and $R^{103}$ each independently represents a group represented by alkyl having 1 to 12 carbon atoms, alkoxy having 1 to 12 carbon atoms, or $-O-(R^{111}-O)_z-R^{112}$ ($R^{111}$s of z pieces each independently represents a divalent hydrocarbon group having 1 to 30 carbon atoms; $R^{112}$ represents alkyl having 1 to 30 carbon atoms, alkenyl having 2 to 30 carbon atoms, aryl having 6 to 30 carbon atoms, or aralkyl having 7 to 30 carbon atoms; and z represents an integer of 1 to 30); and $R^{104}$ represents an alkylene having 1 to 6 carbon atoms.)

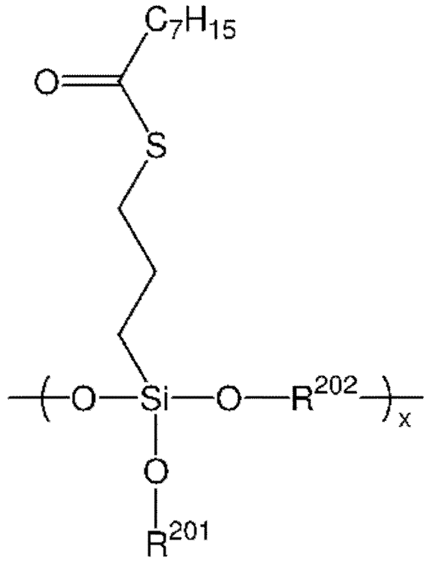

(2)

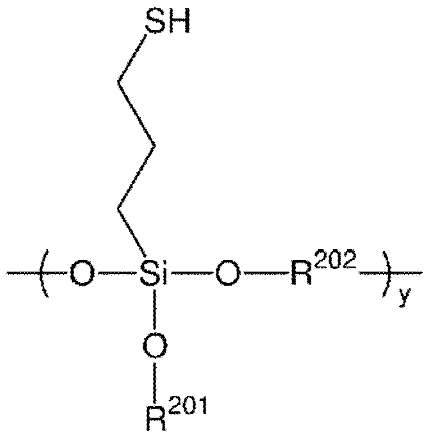

(3)

(wherein, x represents an integer of 0 or more; y represents an integer of 1 or more; $R^{201}$ represents alkyl having 1 to 30 carbon atoms, alkenyl having 2 to 30 carbon atoms, or alkynyl having 2 to 30 carbon atoms, which may be substituted with a hydrogen atom, a halogen atom, hydroxyl, or carboxyl; and $R^{202}$ represents alkylene having 1 to 30 carbon atoms, alkenylene having 2 to 30 carbon atoms, or alkynylene having 2 to 30 carbon atoms; where $R^{201}$ and $R^{202}$ may together form a ring structure.)

Examples of the compound represented by the chemical formula (1) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following chemical formula (4) (Si363 manufactured by Evonik Degussa GmbH), and the like. Among them, the compound represented by the following chemical formula (4) can be appropriately used.

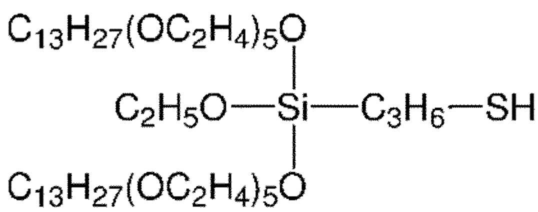

(4)

Examples of the compound comprising the bond unit A represented by the chemical formula (2) and the bond unit B represented by the chemical formula (3) include, for example, NXT-Z30, NXT-Z45, NXT-Z60, and NXT-Z100 manufactured by Momentive Performance Materials, and the like.

A content of a silane coupling agent when compounded based on 100 parts by mass of silica is preferably 2 parts by mass or more, more preferably 5 parts by mass or more, because a sufficient effect of improving a filler dispersibility and an effect of reducing viscosity, etc. can be obtained. Moreover, the content of the silane coupling agent

is preferably 20 parts by mass or less, more preferably 15 parts by mass or less, because otherwise a sufficient coupling effect and a silica dispersion effect cannot be obtained, and a reinforcing property is lowered.

(Other fillers)

Examples of fillers other than the above-described fillers include, but not particularly limited to, aluminum hydroxide, alumina (aluminum oxide), calcium carbonate, talc, and the like. These fillers can be used alone, or two or more thereof can be used in combination.

(Other compounding agents)

The rubber composition for tread of the present embodiment can appropriately comprise compounding agents generally used in production of a rubber composition, such as, for example, an antioxidant, processing aid, wax, stearic acid, zinc oxide, a softening agent, a vulcanizing agent, and a vulcanization accelerator, in addition to the above-described components.

(Antioxidant)

An antioxidant is not particularly limited, and those used in the rubber field can be used, examples of which include, for example, quinoline-based, quinone-based, phenol-based, and phenylenediamine-based antioxidants, and the like. The antioxidant may be used alone, or two or more thereof may be used in combination.

A content of the antioxidant when compounded based on 100 parts by mass of the rubber component is preferably 0.5 parts by mass or more, more preferably 0.8 parts by mass or more. Moreover, the content of the antioxidant is preferably 6.0 parts by mass or less, more preferably 5.0 parts by mass or less, further preferably 4.0 parts by mass or less, from the viewpoints of dispersibility of a filler and the like, elongation at break, and kneading efficiency.

(Processing aid)

Examples of processing aid include, for example, a fatty acid metal salt such as zinc stearate, and the like. Specific examples of processing aid include, for example, a fatty acid soap-based processing aid such as EF44 and WB16 manufactured by STRUKTOL. A compounding ratio of processing aid is preferably 0.1 parts by mass or more, and it is preferably 5 parts by mass or less, particularly preferably 3 parts by mass or less, per 100 parts by mass of a total amount of rubber component. Processing aid may be used alone, or two or more thereof may be used in combination.

(Wax)

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of suppressing whitening of a tire due to bloom.

(Stearic acid)

A content of stearic acid when compounded based on 100 parts by mass of the rubber component is preferably 0.2 parts by mass or more, more preferably 1 part by mass or more, from the viewpoint of vulcanization rate. Moreover, it is preferably 10 parts by mass or less, more preferably 5 parts by mass or less, from the viewpoint of processability.

(Zinc oxide)

A content of zinc oxide when compounded based on 100 parts by mass of the rubber component is preferably 0.5 parts by mass or more, more preferably 1 part by mass or more, from the viewpoint of vulcanization rate. Moreover, it is preferably 10 parts by mass or less, more preferably 5 parts by mass or less, from the viewpoint of abrasion resistance.

<Softening agent>

Examples of a softening agent include, for example, oil such as a process oil and a vegetable oil and fat, a liquid diene-based polymer, resin, an ester-based plasticizer, and the like. These softening agents may be used alone, or two or more thereof may be used in combination. Among them, oil is preferable.

Examples of oil include, for example, a process oil, a vegetable oil and fat, or a mixture thereof. As the process oil, for example, a paraffin-based process oil, an aroma-based process oil, a naphthene-based process oil, and the like can be used. Examples of the vegetable oil and fat include a castor oil, a cottonseed oil, a linseed oil, a rapeseed oil, a soybean oil, a palm oil, a coconut oil, a peanut oil, rosin, a pine oil, pine tar, a tall oil, a corn oil, a rice oil, a safflower oil, a sesame oil, an olive oil, a sunflower oil, a palm kernel oil, a camellia oil, a jojoba oil, a macadamia nut oil, a tung oil, and the like. They may be used alone, or two or more thereof may be used in combination. As oil, for example, products from Idemitsu Kosan Co., Ltd., Sankyo Yuka Kogyo K.K., Japan Energy Corporation, Olisoy, H8vR Group, Hokoku Corporation, Showa Shell Sekiyu K.K., Fuji Kosan Co., Ltd., etc. can be used.

The liquid diene-based polymer is a diene-based polymer in a liquid state at a normal temperature (25°C). A weight-average molecular weight (Mw) of the liquid diene-based polymer is preferably $3.0 \times 10^3$ or more, more preferably $4.0 \times 10^3$ or more, and it is preferably $1.0 \times 10^5$ or less, more preferably $1.5 \times 10^4$ or less. When it is within the above-described ranges, the effect can be obtained more appropriately. Besides, in the present specification, the weight-average molecular weight (Mw) can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

Examples of the liquid diene-based polymer include a liquid styrene-butadiene copolymer (a liquid SBR), a liquid butadiene polymer (a liquid BR), a liquid isoprene polymer (a liquid IR), a liquid styrene-isoprene copolymer (a liquid SIR), and the like. They may be used alone, or two or more thereof may be used in combination. As the liquid diene-based polymer, for example, products from Sartomer, Kuraray Co., Ltd., etc. can be used.

Resin is not particularly limited as long as it is generally used in the tire industry, examples of which include a rosin-based resin, a coumarone indene resin, an $\alpha$-methylstyrene-based resin, a terpene-based resin, a p-t-butylphenol acetylene resin, an acryl-based resin, a C5 resin, a C9 resin, and the like. As commercial products, products from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical Company, LLC, Nitto Chemical Co., Ltd., Nippon Shokubai Co., Ltd., JXTG Nippon Oil 8v Energy Corporation, Arakawa Chemical Industries, Ltd., Taoka Chemical Co., Ltd., Toagosei Co., Ltd., etc. can be used. They may be used alone, or two or more thereof may be used in combination.

A softening point of resin is preferably -45°C or higher, more preferably 0°C or higher, further preferably 30°C or higher, further preferably 60°C or higher, further preferably 80°C or higher, from the viewpoint of the effects of the present invention. Moreover, an upper limit of the softening point is, but not particularly limited to, preferably 180°C or lower, more preferably 160°C or lower, further preferably 140°C or lower, further preferably 120°C or lower. Besides, the softening point of resin is a temperature at which a sphere drops when the softening point specified in JIS K 6220-1: 2001 is measured with a ring and ball softening point measuring device.

As the above-described resin, for example, products from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical Company, LLC, Nitto Chemical Co., Ltd., Nippon Shokubai Co., Ltd., JXTG Nippon Oil 8v Energy Corporation, Arakawa Chemical Industries, Ltd., Taoka Chemical Co., Ltd., etc. can be used.

Examples of the ester-based plasticizer include the above-described vegetable oil; synthetic products such as glycerin fatty acid monoester, glycerin fatty acid diester, and glycerin fatty acid triester, and processed products of vegetable oil; phosphoric acid ester (phosphate-based ester, a mixture thereof, etc.). They may be used alone, or two or more thereof may be used in combination.

A content of the softening agent based on 100 parts by mass of the rubber component is preferably 1 part by mass or more, more preferably 3 parts by mass or more, from the viewpoint of processability. Moreover, the content of the softening agent is preferably 10 parts by mass or less, more preferably 5 parts by mass or less, from the viewpoints of block resistance and abrasion resistance.

(Vulcanizing agent)

As a vulcanizing agent, sulfur, a hybrid cross-linking agent, and the like are appropriately used. They may be used alone, or two or more thereof may be used in combination. By comprising a hybrid cross-linking agent, a strong cross-linked chain is formed near a terminal of a polymer, so that chipping resistance tends to be improved, which is preferable.

As sulfur, a powdery sulfur, an oil processing sulfur, a precipitated sulfur, a colloidal sulfur, an insoluble sulfur, a highly dispersible sulfur, and the like can be used. They may be used alone, or two or more thereof may be used in combination. As sulfur, for example, products from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. can be used.

Examples of the hybrid cross-linking agent include an alkyl sulfide cross-linking agent, an alkylphenol-sulfur chloride condensate, and the like. They may be used alone, or two or more thereof may be used in combination. Among

them, an alkyl sulfide cross-linking agent is preferable, and 1,6-bis(N,N'-dibenzylthiocarbamoyldithio)hexane is preferable.

A content of sulfur when used as a vulcanizing agent based on 100 parts by mass of the rubber component is preferably 0.5 parts by mass or more, more preferably 1.0 part by mass or more, from the viewpoints of securing a sufficient vulcanization reaction and obtaining good grip performance and abrasion resistance. Moreover, it is preferably 3.0 parts by mass or less, more preferably 2.5 parts by mass or less, from the viewpoint of deterioration.

When a hybrid cross-linking agent is used as a vulcanizing agent, a content of the hybrid cross-linking agent based on 100 parts by mass of the rubber component is preferably 0.5 parts by mass or more, more preferably 1.0 part by mass or more, while it is preferably 5 parts by mass or less, more preferably 3 parts by mass or less. Within the above-described ranges, the effect tends to be better obtained.

When sulfur and a hybrid cross-linking agent are used in combination as vulcanizing agents, a content of sulfur based on 100 parts by mass of the rubber component is preferably 0.1 parts by mass or more, more preferably 0.3 parts by mass or more, while it is preferably 1.0 part by mass or less, more preferably 0.8 parts by mass or less, from the viewpoint of the effects of the present invention. Moreover, when sulfur and a hybrid cross-linking agent are used in combination as vulcanizing agents, a content of the hybrid cross-linking agent based on 100 parts by mass of the rubber component is preferably 0.5 parts by mass or more, more preferably 0.7 parts by mass or more, further preferably 1.0 part by mass or more, while it is preferably 4.0 parts by mass or less, more preferably 3.0 parts by mass or less, further preferably 2.0 parts by mass or less, from the viewpoint of the effects of the present invention.

Examples of vulcanizing agents other than the above-described vulcanizing agents include, for example, a vulcanizing agent comprising a sulfur atom such as DURALINK HTS (sodium hexamethylene-1,6-bisthiosulfate dihydrate) manufactured by Flexsys, an organic peroxide such as dicumyl peroxide, and the like.

(Vulcanization accelerator)

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone, or two or more thereof may be used in combination. Among them, sulfenamide-based vulcanization accelerators, thiazole-based vulcanization accelerators, and guanidine-based vulcanization accelerators are preferable, and sulfenamide-based vulcanization accelerators are more preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-tert-butyl-2-benzothiazolylsulfenamide (TBBS) and N-cyclohexyl-2-benzothiazolylsulfenamide (CBS) are preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

Examples of the guanidine-based vulcanization accelerator include, for example, 1,3-diphenylguanidine, 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine is preferable.

A content of a vulcanization accelerator when compounded based on 100 parts by mass of the rubber component is preferably 0.5 parts by mass or more, preferably 1.0 part by mass or more, from the viewpoint of securing a sufficient vulcanization rate. Moreover, the content of the vulcanization accelerator is preferably 10 parts by mass or less, more preferably 5 parts by mass or less, from the viewpoint of suppressing blooming.

<Condition (1)>

The tan $\delta_{30°C}$ (A) of the rubber composition of the present invention is 0.12 or more. The tan $\delta$ is an index of fuel efficiency, and the smaller the value is, the more preferable the fuel efficiency is. However, in the present invention, the tan $\delta_{30°C}$ (A) is required to be 0.12 or more, from the viewpoint of the effects of the present invention. The value of tan $\delta_{30°C}$ (A) is preferably 0.15 or more, more preferably 0.18 or more, from the viewpoint of the effects of the present invention. Moreover, the value of tan $\delta_{30°C}$ (A) is preferably less than 0.25, more preferably 0.24 or less, further preferably 0.23 or less. Besides, the tan $\delta_{30°C}$ is calculated by the method described in the section of Examples which will be described later.

The tan $\delta_{30°C}$ (A) can be adjusted by a conventional method in the tire industry, which can be performed by adjusting types or amounts of chemicals (particularly a rubber component, a filler, a softening agent, sulfur, a vulcanization accelerator, a silane coupling agent) compounded in a rubber composition. The tan $\delta_{30°C}$ (A) tends to be lowered by,

for example, using a rubber component with few unsaturated bonds, using a softening agent with a high compatibility with the rubber component, using a modified rubber, using silica as a filler, reducing an amount of oil as a plasticizer, increasing an amount of sulfur, increasing an amount of a vulcanization accelerator, or increasing an amount of a silane coupling agent. Therefore, a person skilled in the art can appropriately adjust tan $\delta_{30°C}$ (A) according to a target value of tan $\delta_{30°C}$ (A).

<Condition (2)>

A value of a ratio ($EB_{80°C}/EB_{23°C}$ = B) of an elongation at break at 80°C ($EB_{80°C}$) to an elongation at break at 23°C ($EB_{23°C}$) of the rubber composition of the present invention is within a range of $0.60 \leq B \leq 1.00$. The value of each EB is an index of difficulty in break of the rubber composition at each temperature (80°C or 23°C), and the larger the value is, the more excellent the effect is. In the present invention, a ratio (B) of $EB_{80°C}$ to $EB_{23°C}$ is required to be within the range of $0.60 \leq B \leq 1.00$, from the viewpoint of the effects of the present invention. The value of B is preferably 0.70 or more, more preferably 0.80 or more, more preferably 0.85 or more, from the viewpoint of the effects of the present invention. On the other hand, the value of B is preferably 0.95 or less, more preferably 0.93 or less, from the viewpoint of the effects of the present invention. Besides, the value of each EB is calculated by the method described in the section of Examples which will be described later.

The values of $EB_{23°C}$ and $EB_{80°C}$ can be adjusted by a conventional method in the tire industry, which can be performed by adjusting types or amounts of chemicals (particularly a rubber component, a filler, a softening agent, sulfur, a vulcanization accelerator, a silane coupling agent) compounded in a rubber composition. For example, the value of $EB_{23°C}$ tends to be increased by, as an example, decreasing a content of a filler or increasing a content of a softening agent. Moreover, the value of $EB_{80°C}$ tends to be increased by, as an example, increasing a content of a NR. Therefore, a person skilled in the art can appropriately adjust $EB_{80°C}/EB_{23°C}$ (B) according to a target value of $EB_{80°C}/EB_{23°C}$ (B).

<Condition (3)>

An abrasion resistance index (C) of the rubber composition of the present invention measured by a LAT tester when the tire of Comparative example 1 being 100 is $110 \leq C \leq 140$. Generally, a larger abrasion resistance index means an excellent abrasion resistance and is preferable. However, in the present invention, the abrasion resistance index (C) is required to be $110 \leq C \leq 140$ from the viewpoint of the effects of the present invention. The value of the abrasion resistance index (C) is preferably 115 or more, more preferably 120 or more, from the viewpoint of the effects of the present invention. Moreover, the value of the abrasion resistance index (C) is preferably 135 or less, more preferably 130 or less, further preferably 125 or less, from the viewpoint of the effects of the present invention. Besides, the value of the abrasion resistance index is calculated by the method described in the section of Examples which will be described later.

The abrasion resistance index (C) can be adjusted by a conventional method in the tire industry, which can be performed by adjusting types or amounts of chemicals (particularly a rubber component, a filler, a softening agent, sulfur, a vulcanization accelerator, a silane coupling agent) compounded in a rubber composition. The abrasion resistance tends to be increased by, for example, increasing a content of a BR as a rubber component, increasing a content of a filler, or decreasing a content of a vulcanizing agent. Therefore, a person skilled in the art can appropriately adjust abrasion resistance index (C) according to a target value of abrasion resistance index (C).

[Tire]

Hereinafter, the tire of the present invention will be described with reference to the drawings as appropriate. Besides, the tire of the present invention is not limited to the following embodiments.

The tire of the present invention is a tire comprising a tread formed of the above-described rubber composition, wherein the tread has a crown part and a pair of shoulder parts, the crown part having a center at a tire equator and having a width of 1/3 of a tread grounding surface width, each of the pair of shoulder parts being located at both sides of the crown part and having a width of 1/3 of the tread grounding surface width, and the crown part and the shoulder parts satisfying the following condition (4), wherein the tread has at least one circumferential main groove extending continuously in a tire circumferential direction, the circumferential main groove satisfying the following condition (5), and wherein the A, the B, the C, the D, and the E satisfy the following inequality (6):

(4) when a ratio ($LAND_{Sh}/LAND_{Cr}$) of a land ratio of the entire pair of shoulder parts ($LAND_{Sh}$) to a land ratio of the crown part ($LAND_{Cr}$) is D, $0.80 \leq D \leq 2.00$,
(5) when a maximum groove depth of the circumferential main groove is E (mm), $5 \leq E \leq 20$, and
(6)

$$25 \leq (B \times C/A) \times (D/E) \leq 200.$$

In the present specification, a dimension of each part of the tire is a value measured in a normal state, unless otherwise specified. The normal state is a state where the tire is rim-assembled on a normal rim and a normal internal pressure is filled, and no load is applied.

A "normal rim" is a rim defined for each tire in a standard system including a standard on which the tire is based, i.e., a "standard rim" in JATMA, "Design Rim" in TRA, or "Measuring Rim" in ETRTO. Besides, if a size of the tire is not specified in the above-described standard systems, the normal rim is a rim which can be assembled to the tire and whose width is narrowest among rims having the smallest diameter that does not cause air leakage between the rim and the tire.

A "normal internal pressure" is an air pressure defined for each tire in a standard system including a standard on which the tire is based, i.e., a "maximum air pressure" in JATMA, a maximum value described in Table "TIRE LOAD LIMITS AT VARIOUS COLD INFLATION PRESSURES" in TRA, or "INFLATION PRESSURE" in ETRTO. Besides, if a size of the tire is not specified in the above-described standard systems, the normal internal pressure shall be 250 kPa.

In addition, a "normal load" is a load defined for each tire in a standard system including a standard on which the tire is based, i.e., a "maximum load capacity" in JATMA, a maximum value described in Table "TIRE LOAD LIMITS AT VARIOUS COLD INFLATION PRESSURES" in TRA, or "LOAD CAPACITY" in ETRTO. Besides, in the case of a tire having a size not specified in the above-described standard systems, a normal load $W_L$ (kg) can be estimated by the following equations (1) and (2) where a cross-sectional width of the tire measured in the normal state is Wt (mm), a cross-sectional height of the tire measured in the normal state is Ht (mm), and an outer diameter of the tire measured in the normal state is Dt (mm). The cross-sectional width of the tire Wt is a maximum width between outer surfaces of sidewalls excluding, if any, patterns or characters on the side surface of the tire in the above-described state. The cross-sectional height of the tire Ht is a distance from the bottom surface of a bead part to the outermost surface of a tread, which is half a difference between the outer diameter of the tire and a nominal size of a rim.

$$V = \{(Dt/2)^2 - (Dt/2-Ht)^2\} \times \pi \times Wt \ldots (1)$$

$$W_L = 0.000011 \times V + 175 \ldots (2)$$

<Condition (4)>

In the tire of the present invention, a ratio ($LAND_{Sh}/LAND_{Cr}$ = D) of a land ratio of the entire pair of shoulder parts ($LAND_{Sh}$) to a land ratio of the crown part ($LAND_{Cr}$) is within a range of $0.80 \leq D \leq 2.00$. Rigidity of the crown part and the shoulder part can be enhanced by increasing the land ratio. However, in the present invention, it is preferable to set a difference of the land ratios between the crown part and the shoulder part within a predetermined range, thereby reducing the difference in rigidity between them, from the viewpoint of the effects of the present invention. The value of $LAND_{Sh}/LAND_{Cr}$ (D) is preferably 0.85 or more, more preferably 0.90 or more. The value of $LAND_{Sh}/LAND_{Cr}$ (D) is preferably 1.90 or less, more preferably 1.80 or less, further preferably 1.70 or less, further preferably 1.60 or less, further preferably 1.50 or less, further preferably 1.40 or less, further preferably 1.30 or less, further preferably 1.20 or less, further preferably 1.10 or less, further preferably 1.08 or less.

In the present specification, the land ratio is a ratio (%) of an actual total grounding surface area Sb to a virtual total grounding surface area Sa where all of grooves and, if any, sipes are filled. Besides, the sipe is a narrow notch having a width of 2.0 mm or less, preferably 0.5 to 1.5 mm. For example, each of FIGS. 1 to 3 is a development view of a tread pattern for an example of the tire of the present invention. In FIG. 1, a portion surrounded by a frame and shaded represents a tread surface when a normal load is applied. For the tread surface, a land ratio is calculated for the crown part located in the center and for the entire pair of shoulder parts located on both sides of the crown part, which are partitioned by two straight lines that divide the tread grounding surface width TW into three equal parts. For example, in FIG. 1, a land ratio of the crown part can be calculated as 66.12%, and a land ratio of the entire pair of shoulder parts can be calculated as 70.60%. Similarly, in FIG. 2, a land ratio of the crown part can be calculated as 66.40%, and a land ratio of the entire pair of shoulder parts can be calculated as 63.84%, and in FIG. 3, a land ratio of the crown part is calculated as 42.12%, and a land ratio for the entire pair of shoulder parts can be calculated as 73.05% (= (71.64% + 74.46%)/2). Besides, in FIGS. 1 to 3, the upper side is a stencil side and the lower side is a non-stencil side.

The $LAND_{Cr}$ is preferably 40 or more, more preferably 45 or more, while it is preferably 70 or less, more preferably 65 or less, from the viewpoint of the effects of the present invention.

The $LAND_{Sh}$ is preferably 45 or more, more preferably 50 or more, while it is preferably 80 or less, more

preferably 75 or less, from the viewpoint of the effects of the present invention.

<Condition (5)>

In the tire of the present invention, the maximum groove depth (E) (mm) of the circumferential main groove is within a range of $5 \leq E \leq 20$. The maximum groove depth of the circumferential main groove originally affects a balance of steering stability and wet grip performance on a dry road surface, but in the present invention, it is adjusted to be within a predetermined range from the viewpoint of the effects of the present invention. The maximum groove depth (E) of the circumferential main groove is preferably 6 mm or more, more preferably 7 mm or more, further preferably 8 mm or more. Moreover, the maximum groove depth (E) of the circumferential main groove is preferably 18 mm or less, more preferably 15 mm or less, further preferably 13 mm or less.

<Inequality (6)>

In the tire of the present invention, for the A (tan $\delta_{30^\circ C}$), the B ($EB_{80^\circ C}/EB_{23^\circ C}$), the C (abrasion resistance index), the D ($LAND_{Sh}/LAND_{Cr}$), and the E (maximum groove depth), a value represented by $(B \times C/A) \times (D/E)$ is within a range of $25 \leq (B \times C/A) \times (D/E) \leq 200$. Here, the A (tan $\delta_{30^\circ C}$), the B ($EB_{80^\circ C}/EB_{23^\circ C}$), and the C (abrasion resistance index) are all values relating to the physical property of the rubber composition of the tread, while the D ($LAND_{Sh}/LAND_{Cr}$) and E (maximum groove depth) are values relating to the tread pattern.

The tire of the present invention requires that a product of a value of "$B \times C/A$" composed of the A to the C relating to the physical property of the rubber composition of the tread and a value of "D/E" composed of the D to the E relating to the tread pattern fall within a predetermined range of 25 to 200. Accordingly, it is considered that the value of "$B \times C/A$" relating to the physical property of the rubber composition of the tread and the value of "D/E" relating to the tread pattern mutually regulate each other, thereby, as a result, keeping the both within a given range, and achieving the effects of the present invention.

The value represented by $(B \times C/A) \times (D/E)$ is preferably 26 or more, more preferably 35 or more, further preferably 45 or more, further preferably 55 or more. Moreover, the value represented by $(B \times C/A) \times (D/E)$ is preferably 190 or less, more preferably 180 or less, further preferably 175 or less.

(Stencil $LAND_{Sh}$ and non-stencil $LAND_{Sh}$)

In the tire of the present invention, when, of the pair of shoulder parts, a stencil $LAND_{Sh}$ means a land ratio of the shoulder part on one side where a convex marker is provided on an outer surface of a sidewall and a non-stencil $LAND_{Sh}$ means a land ratio of the other shoulder part on the opposite side, it is preferable that the stencil $LAND_{Sh}$<the non-stencil $LAND_{Sh}$. This is because, usually, by increasing the land ratio of the shoulder part on the non-stencil side which is inside the vehicle, there is a tendency that both off-road running performance and steering stability are achieved.

(Form of circumferential main groove)

In the tire of the present invention, the circumferential main groove is preferably in a zigzag or wavy shape having an amplitude in a tire width direction. Here, the zigzag shape means that the center line of the circumferential main groove has a plurality of bent parts which have an edge component in the tire width direction. Moreover, the wavy shape means that the center line of the circumferential main groove meanders in a wavy manner. In either case, the center line of the circumferential main groove has an amplitude in the tire width direction. The circumferential main groove in FIG. 1 and the circumferential main groove in FIG. 2 are examples of the zigzag shape. On the other hand, the circumferential main groove in FIG. 3 is not in a zigzag shape, but in a linear shape. When the circumferential main groove is in a zigzag or wavy shape, the tire can catch a road surface more accurately even on a soft road or a hard road, and steering stability tends to be improved.

(Groove depth of circumferential main groove)

In the tire of the present invention, the groove depth of the circumferential main groove is preferably a depth corresponding to 50 to 80% of a distance (F) from a point at a tread surface in the circumferential groove part toward inside in a tire radial direction to a tread end. When the groove depth of the circumferential main groove is within such a range, there are tendencies that an abrasion life of the tire is extended and chipping can be suppressed. The groove depth of the circumferential main groove is preferably 55% or more, more preferably 60% or more of the distance F. Moreover, the groove depth of the circumferential main groove is preferably 75% or less, more preferably 70% or less of the distance F.

[Production of tire]

The tire of the present invention can be produced by a general method. For example, an unvulcanized rubber composition is produced by a method of kneading components other than cross-linking agents and vulcanization accelerators, of the above-described components, with a known kneading machine used in the general tire industry such as a Banbury mixer, a kneader, and an open roll, then adding the cross-linking agents and the vulcanization accelerators to the mixture to further knead them, and then vulcanizing them, and the like.

Furthermore, the tire can be produced by extruding the unvulcanized rubber composition obtained above into a tread shape, attaching it together with other tire members and molding them by a usual method on a tire molding machine to form an unvulcanized tire, followed by heating and pressurizing this unvulcanized tire in a vulcanizing machine.

[Application]

A category of the tire of the present invention is not particularly limited, and the tire can be used as a tire for a passenger car, a heavy duty tire for a truck or bus, etc., a tire for a two-wheeled vehicle, a run flat tire, a non-pneumatic tire, or the like, but in particular, due to its characteristics, it can be appropriately used as a tire for a harsh area or an off-road use.

EXAMPLE

The present invention will be specifically described based on Examples, but the present invention is not limited to Examples only.

<Various chemicals>

Various chemicals used in Examples and Comparative examples will be described.

NR: TSR20
SBR: SBR1502 manufactured by JSR Corporation (styrene content: 23.5% by mass, vinyl content: 16% by mass, non-oil extended)
BR: UBEPOL BR150B manufactured by Ube Industries, Ltd. (Mw: 440,000, high cis BR, cis-1,4 bond content: 96%)
Carbon black: N134 manufactured by Tokai Carbon Co., Ltd. ($N_2SA$: 143 $m^2$/g)
Silica 1: Ultrasil 9100GR manufactured by Evonik Degussa GmbH ($N_2SA$: 212 $m^2$/g)
Silica 2: Ultrasil VN3 manufactured by Evonik Degussa GmbH ($N_2SA$: 175 $m^2$/g, average primary particle size: 15nm)
Silane coupling agent 1: Si69 manufactured by Evonik Degussa GmbH (bis(3-triethoxysilylpropyl)tetrasulfide)
Silane coupling agent 2: NXT-Z45 manufactured by Momentive Performance Materials (copolymer of bond unit A and bond unit B (bond unit A: 55 mol%, bond unit B: 45 mol%))
Wax: OZOACE 355 manufactured by Nippon Seiro Co., Ltd.
Antioxidant 1: Nocrac 6C manufactured by Ouchi Shinko Chemical Industry Co., Ltd. (N-(1,3-dimethylbutyl)-N-phenyl-p-phenylenediamine, 6PPD)
Antioxidant 2: Nocrac RD manufactured by Ouchi Shinko Chemical Industry Co., Ltd. (poly(2,2,4-trimethyl-1,2-dihydroquinoline))
Stearic acid: Bead stearic acid "CAMELLIA" manufactured by NOF CORPORATION
Zinc oxide: Zinc oxide No. 2 manufactured by Mitsui Mining 8v Smelting Co., Ltd.
Hybrid cross-linking agent: Vulcuren VP KA9188 manufactured by LANXESS (1,6-bis(N,N'-dibenzylthiocarbamoyldithio)hexane)
Sulfur: Powdered sulfur manufactured by Tsurumi Chemical Industry Co., Ltd.
Vulcanization accelerator 1: Nocceler NS manufactured by Ouchi Shinko Chemical Industry Co., Ltd. (N-tert-butyl-2-benzothiazolylsulfenamide (TBBS))
Vulcanization accelerator 2: Nocceler D manufactured by Ouchi Shinko Chemical Industry Co., Ltd. (N,N'-diphenylguanidine)

(Examples and Comparative examples)

According to the compounding formulations shown in Table 1, using a 1.7 L closed Banbury mixer, all chemicals other than sulfur and vulcanization accelerators were kneaded until reaching a discharge temperature at 170°C for 5 minutes to obtain a kneaded product. Furthermore, the obtained kneaded product was kneaded again (remilled) with the above-described Banbury mixer at a discharge temperature of 150°C for 4 minutes. Next, using a twin-screw open

roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was press-vulcanized at 170°C for 12 minutes to produce a test vulcanized rubber composition.

Moreover, according to the pattern shown in Table 1, the above-described unvulcanized rubber composition was extruded into a shape of a tire tread with an extruder equipped with a mouthpiece having a predetermined shape and attached together with other tire members, forming an unvulcanized tire, and the unvulcanized tire was press-vulcanized to produce a test tire (265/50R20). Besides, a shape of each circumferential main groove was in a zigzag shape.

The obtained test vulcanized rubber composition and test tire were evaluated as follows. The evaluation results are shown in Table 1.

<Viscoelasticity test>

For the test vulcanized rubber composition, using a viscoelastic spectrometer VES manufactured by Iwamoto Seisakusho Co., Ltd., a tan δ (tan $\delta_{30°C}$) under a condition of a temperature at 30°C, an initial strain of 10%, a dynamic strain of 2%, and a frequency of 10 Hz was measured.

<Tensile characteristics>

A tensile test was conducted at temperatures of 23°C and 80°C, according to JIS K 6251 "Rubber, vulcanized or thermoplastics-Determination of tensile stress-strain properties", using a No. 3 dumbbell type test piece composed of a test vulcanized rubber composition, to measure an elongation at break at 23°C $EB_{23°C}$ (%) and an elongation at break at 80°C $EB_{80°C}$ (%), respectively.

<Abrasion resistance index>

An amount of volume loss of each vulcanized rubber sheet (rubber composition after vulcanization) was measured under a condition of a load of 40 N, a speed at 20 km/h, and a slip angle of 6° using a LAT tester (Laboratory Abrasion and Skid Tester, a rubber abrasion tester "LAT100" manufactured by Heisen Yoko Co., Ltd.). An abrasion resistance index of each compounding was calculated with an amount of volume loss of the compounded rubber in Comparative example 1 being 100 by the following equation. The results show that the larger the numerical value is, the more excellent the abrasion resistance is.

$$\text{(Abrasion resistance index)} = \text{(amount of volume loss of compounding in Comparative example 1)} / \text{(amount of volume loss of each compounding)} \times 100$$

<Off-road running performance>

Each test tire was mounted on all wheels of a four-wheel drive vehicle having a displacement of 3600 cc under the following condition. Then, a test driver ran the four-wheel drive vehicle on an off-road test course with a soft road surface formed of mud and a rocky road surface. The test driver evaluated running characteristics related to traction, a force of grasping mud or rocks, running stability, etc. at that time by sensory. The results were displayed with a score as Comparative example 1 being 100. The larger the numerical value is, the better the effect is.

Rim: 20 × 8.5J
Internal pressure: 255 kPa
Load: 54% of normal load

Table 1

| | Example | | | | | Comparative example | | | | | |
|---|---|---|---|---|---|---|---|---|---|---|---|
| | 1 | 2 | 3 | 4 | 5 | 1 | 2 | 3 | 4 | 5 | 6 |
| Compounding (part by mass) | | | | | | | | | | | |
| NR | 15 | 15 | 15 | 15 | 15 | 15 | 15 | 15 | 15 | 15 | 15 |
| SBR | 50 | 50 | 50 | 50 | 50 | 50 | 50 | 50 | 50 | 50 | 50 |
| BR | 35 | 35 | 35 | 35 | 35 | 35 | 35 | 35 | 35 | 35 | 35 |
| Carbon black | 10 | 10 | 10 | 10 | 10 | 30 | 10 | 10 | 10 | 10 | 30 |
| Silica 1 | 65 | 65 | 65 | 65 | 65 | - | - | - | 65 | 65 | - |
| Silica 2 | - | - | - | - | - | 47 | 70 | 70 | - | - | 47 |
| Silane coupling agent 1 | - | - | - | - | - | 5.0 | - | 7.0 | - | - | 5.0 |
| Silane coupling agent 2 | 6.5 | 6.5 | 6.5 | 6.5 | 6.5 | - | 7.0 | - | 6.5 | 6.5 | - |
| Wax | 2.0 | 2.0 | 2.0 | 2.0 | 2.0 | 2.0 | 2.0 | 2.0 | 2.0 | 2.0 | 2.0 |
| Antioxidant 1 | 2.0 | 2.0 | 2.0 | 2.0 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 | 1.0 | 1.0 | 1.0 | 1.0 |
| Stearic acid | 3.0 | 3.0 | 3.0 | 3.0 | 3.0 | 3.0 | 3.0 | 3.0 | 3.0 | 3.0 | 3.0 |
| Zinc oxide | 3.0 | 3.0 | 3.0 | 3.0 | 3.0 | 3.0 | 3.0 | 3.0 | 3.0 | 3.0 | 3.0 |
| Hybrid cross-linking agent | 1.0 | 1.0 | 1.0 | 1.0 | 1.0 | - | 1.0 | 1.0 | - | 1.0 | - |
| Sulfur | 1.5 | 1.5 | 1.5 | 1.5 | 1.5 | 1.5 | 1.5 | 1.5 | 1.5 | 1.5 | 1.5 |
| Vulcanization accelerator 1 | 1.5 | 1.5 | 1.5 | 1.5 | 1.5 | 1.0 | 1.5 | 1.5 | 1.0 | 1.5 | 1.0 |
| Vulcanization accelerator 2 | 1.0 | 1.0 | 1.0 | 1.0 | 1.0 | - | 1.0 | 1.0 | - | 1.0 | - |
| Physical property | | | | | | | | | | | |
| (1) A: $\tan \delta_{30^\circ C}$ | 0.19 | 0.23 | 0.19 | 0.19 | 0.19 | 0.23 | 0.20 | 0.22 | 0.19 | 0.19 | 0.23 |
| (2) B: $EB_{80^\circ C}/EB_{23^\circ C}$ | 0.86 | 0.90 | 0.86 | 0.86 | 0.86 | 0.83 | 0.84 | 0.83 | 0.88 | 0.86 | 0.83 |
| $EB_{80^\circ C}$ (%) | 560 | 520 | 560 | 560 | 560 | 480 | 470 | 450 | 490 | 560 | 480 |
| $EB_{23^\circ C}$ (%) | 650 | 580 | 650 | 650 | 650 | 580 | 560 | 540 | 560 | 650 | 580 |
| (3) C: Abrasion resistance index | 120 | 130 | 120 | 120 | 120 | 100 | 100 | 100 | 90 | 120 | 100 |
| Pattern | | | | | | | | | | | |
| (4) D: $LAND_{Sh}/LAND_{Cr}$ | 1.08 | 1.00 | 1.67 | 0.92 | 1.08 | 1.08 | 1.08 | 1.08 | 1.08 | 2.67 | 0.92 |
| $LAND_{Sh}$ (%) | 70 | 50 | 75 | 60 | 70 | 70 | 70 | 70 | 70 | 80 | 60 |
| $LAND_{Sh}$ (%) (non-stencil) | 70 | 50 | 75 | 60 | 75 | 70 | 70 | 70 | 70 | 80 | 60 |
| $LAND_{Sh}$ (%) (stencil) | 70 | 50 | 75 | 60 | 65 | 70 | 70 | 70 | 70 | 80 | 60 |
| $LAND_{Cr}$ (%) | 65 | 50 | 45 | 65 | 65 | 65 | 65 | 65 | 65 | 30 | 65 |
| (5) E: Groove depth (mm) | 9.0 | 9.0 | 5.0 | 18.0 | 9.0 | 9.0 | 9.0 | 9.0 | 9.0 | 5.0 | 18.0 |
| (6) (B × C/A) × (D/E) | 65 | 56 | 181 | 28 | 65 | 43 | 50 | 45 | 50 | 290 | 18 |
| F: Groove depth to tread thickness (%) | 70 | 70 | 70 | 70 | 70 | 70 | 70 | 70 | 70 | 70 | 70 |
| Evaluation | | | | | | | | | | | |
| Off-road running performance | 120 | 110 | 110 | 130 | 135 | 100 | 90 | 80 | 100 | 70 | 80 |

From the results in Table 1, it can be found that the tires in Examples are excellent in off-road running performance and also maintain excellent values in tan $\delta_{30°C}$ (A) which is an index of fuel efficiency and in an abrasion resistance index (C) which is an index of abrasion resistance, compared with the tires in Comparative examples.

INDUSTRIAL APPLICABILITY

According to the present invention, a tire can be provided which exhibits an excellent off-road running performance and can achieve both fuel efficiency and abrasion resistance.

## Claims

1. A tire comprising a tread, the tread being formed of a rubber composition comprising a rubber component comprising 0 to 50% by mass of an isoprene-based rubber,

   wherein the rubber composition satisfies the following conditions (1) to (3):

   (1) when a tan $\delta$ at 30°C (tan $\delta_{30°C}$), measured under a condition of a temperature at 30°C, an initial strain of 10%, a dynamic strain of 2%, and a frequency of 10 Hz, is A, A≥0.12,
   (2) when a ratio ($EB_{80°C}/EB_{23°C}$) of an elongation at break at 80°C ($EB_{80°C}$) to an elongation at break at 23°C ($EB_{23°C}$) is B, 0.60≤B≤1.00, and
   (3) when an abrasion resistance index with a tire of Comparative example 1, as detailed in the specification, being 100 as measured by a LAT tester under a condition of a load of 40 N, a speed at 20 km/h, and a slip angle of 6° is C, 110≤C≤140,

   wherein the tread has a crown part and a pair of shoulder parts, the crown part having a center at a tire equator and having a width of 1/3 of a tread grounding surface width, each of the pair of shoulder parts being located at both sides of the crown part and having a width of 1/3 of the tread grounding surface width, the widths of the shoulder parts and the crown part is determined under a normal state, where the tire is rim-assembled on a normal rim and a normal internal pressure is filled, and no load is applied, and
   the crown part and the shoulder parts satisfying the following condition (4):
   (4) when a ratio ($LAND_{Sh}/LAND_{Cr}$) of a land ratio of the entire pair of shoulder parts ($LAND_{Sh}$) to a land ratio of the crown part ($LAND_{Cr}$) is D, 0.80≤D≤2.00,
   wherein the tread has at least one circumferential main groove extending continuously in a tire circumferential direction, the circumferential main groove satisfying the following condition (5):
   (5) when a maximum groove depth of the circumferential main groove is E (mm), 5≤E≤20, and
   wherein the A, the B, the C, the D, and the E satisfy the following inequality (6):
   (6)

$$25 \leq (B \times C/A) \times (D/E) \leq 200.$$

2. The tire of claim 1, wherein the isoprene-based rubber is a natural rubber.

3. The tire of claim 1 or 2, wherein the rubber composition comprises 20 to 70 parts by mass of silica based on 100 parts by mass of the rubber component.

4. The tire of claim 3, wherein the silica has a nitrogen adsorption specific surface area of 200 $m^2/g$ or more.

5. The tire of any one of claims 1 to 4, wherein the rubber composition comprises 10 to 30 parts by mass of carbon black based on 100 parts by mass of the rubber component.

6. The tire of claim 5, wherein the carbon black has a nitrogen adsorption specific surface area of 120 to 200 $m^2/g$.

7. The tire of any one of claims 3 to 6, wherein the rubber composition comprises 2 to 20 parts by mass of a silane coupling agent based on 100 parts by mass of silica.

8. The tire of any one of claims 1 to 7, wherein the rubber composition comprises 0.5 to 4.0 parts by mass of a hybrid

cross-linking agent based on 100 parts by mass of the rubber component.

**9.** The tire of any one of claims 1 to 8, wherein the D is 0.90<D<1.08.

**10.** The tire of any one of claims 1 to 9, wherein the $LAND_{Sh}$ is 60 to 80.

**11.** The tire of any one of claims 1 to 10, wherein when, of the pair of shoulder parts, a stencil $LAND_{Sh}$ means a land ratio of the shoulder part on one side where a convex marker is provided on an outer surface of a sidewall and a non-stencil $LAND_{Sh}$ means a land ratio of the other shoulder part on the opposite side, the stencil $LAND_{Sh}$<the non-stencil $LAND_{Sh}$.

**12.** The tire of any one of claims 1 to 11, wherein the circumferential main groove has a zigzag or wavy shape having an amplitude in a tire width direction.

**13.** The tire of any one of claims 1 to 12, wherein the groove depth of the circumferential main groove is a depth corresponding to 50 to 80% of a distance from a point at a tread surface in the circumferential groove part toward inside in a tire radial direction to a tread end.

## Patentansprüche

**1.** Reifen, der eine Lauffläche umfasst, wobei die Lauffläche aus einer Kautschukmischung gebildet ist, die eine Kautschukkomponente mit 0 bis 50 Masse-% eines Kautschuks auf Isoprenbasis umfasst,

wobei die Kautschukmischung die folgenden Bedingungen (1) bis (3) erfüllt:

(1) wenn ein tan δ bei 30°C (tan $\delta_{30°C}$), gemessen unter einer Bedingung einer Temperatur von 30°C, einer anfänglichen Dehnung von 10%, einer dynamischen Dehnung von 2% und einer Frequenz von 10 Hz, A ist, wobei A≥0,12,
(2) wenn ein Verhältnis ($EB_{80°C}/EB_{23°C}$) einer Bruchdehnung bei 80°C ($EB_{80°C}$) zu einer Bruchdehnung bei 23°C ($EB_{23°C}$) B ist, wobei 0,60≤B≤1,00, und
(3) wenn ein Abriebwiderstandsindex eines Reifens des Vergleichsbeispiels 1, wie in der Beschreibung beschrieben, 100 beträgt, gemessen mit einem LAT-Prüfgerät unter einer Bedingung einer Last von 40 N, einer Geschwindigkeit von 20 km/h und einem Schlupfwinkel von 6°, C ist, wobei 110≤C≤140,

wobei die Lauffläche einen Kronenteil und ein Paar Schulterteile aufweist, wobei der Kronenabschnitt eine Mitte an einem Reifenäquator aufweist und eine Breite von 1/3 einer Breite der Laufflächen-Boden-Kontaktfläche aufweist, wobei jeder des Paares Schulterteile auf beiden Seiten des Kronenteils angeordnet ist und eine Breite von 1/3 der Breite der Laufflächen-Boden-Kontaktfläche aufweist, wobei die Breiten der Schulterteile und des Kronenteils in einem normalen Zustand bestimmt werden, in dem der Reifen auf eine normale Felge aufgezogen ist, ein normaler Innenfülldruck herrscht und keine Last aufgebracht ist, und
der Kronenteil und die Schulterteile die folgende Bedingung erfüllen (4):
(4) wenn ein Verhältnis ($LAND_{Sh}/LAND_{Cr}$) eines Landverhältnisses des gesamten Paares Schulterteile ($LAND_{Sh}$) zu einem Landverhältnis des Kronenteils ($LAND_{Cr}$) D ist, wobei 0,80≤D≤2,00,
wobei die Lauffläche mindestens eine Umfangshauptrille aufweist, die sich kontinuierlich in einer Reifenumfangsrichtung erstreckt, wobei die Umfangshauptrille die folgende Bedingung (5) erfüllt:
(5) wenn die maximale Rillentiefe der Umfangshauptrille E (mm) ist, wobei 5≤E≤20, und
wobei A, B, C, D und E die folgende Ungleichung (6) erfüllen:
(6)

$$25 \leq (B \times C/A) \times (D/E) \leq 200.$$

**2.** Reifen nach Anspruch 1, wobei der Kautschuk auf Isoprenbasis ein Naturkautschuk ist.

**3.** Reifen nach Anspruch 1 oder 2, wobei die Kautschukmischung 20 bis 70 Masseteile Siliciumdioxid, bezogen auf 100 Masseteile der Kautschuckomponente, enthält.

4. Reifen nach Anspruch 3, wobei das Siliciumdioxid eine spezifische Stickstoffadsorptionsoberfläche von 200 $m^2/g$ oder mehr aufweist.

5. Reifen nach einem der Ansprüche 1 bis 4, wobei die Kautschukmischung 10 bis 30 Masseteile Ruß, bezogen auf 100 Masseteile der Kautschuckomponente, umfasst.

6. Reifen nach Anspruch 5, wobei der Ruß eine spezifische Stickstoffadsorptionsoberfläche von 120 bis 200 $m^2/g$ aufweist.

7. Reifen nach einem der Ansprüche 3 bis 6, wobei die Kautschukmischung 2 bis 20 Masseteile eines Silankupplungsmittels, bezogen auf 100 Masseteile Siliciumdioxid, umfasst.

8. Reifen nach einem der Ansprüche 1 bis 7, wobei die Kautschukmischung 0,5 bis 4,0 Masseteile eines hybriden Vernetzungsmittels, bezogen auf 100 Masseteile der Kautschukkomponente, umfasst.

9. Reifen nach einem der Ansprüche 1 bis 8, wobei für das D 0,90<D<1 ,08 gilt.

10. Reifen nach einem der Ansprüche 1 bis 9, wobei $LAND_{Sh}$ 60 bis 80 beträgt.

11. Reifen nach einem der Ansprüche 1 bis 10, wobei, wenn von dem Paar Schulterteilen ein Matrizen-$LAND_{Sh}$ ein Landverhältnis des Schulterteils auf einer Seite bedeutet, wo eine konvexe Markierung auf einer äußeren Oberfläche einer Seitenwand vorgesehen ist, und ein Nicht-Matrizen-$LAND_{Sh}$ ein Landverhältnis des anderen Schulterteils auf der gegenüberliegenden Seite bedeutet, das Matrizen-$LAND_{Sh}$<das Nicht-Matrizen-$LAND_{Sh}$.

12. Reifen nach einem der Ansprüche 1 bis 11, wobei die Umfangshauptrille eine Zickzack- oder Wellenform mit einer Amplitude in Richtung der Reifenbreite aufweist.

13. Reifen nach einem der Ansprüche 1 bis 12, wobei die Rillentiefe der Umfangshauptrille eine Tiefe ist, die 50 bis 80% eines Abstands von einem Punkt an einer Laufflächenoberfläche in dem Umfangsrillenteil nach innen in einer radialen Richtung des Reifens zu einem Laufflächenende entspricht.

**Revendications**

1. Pneumatique comprenant une bande de roulement, la bande de roulement étant formée d'une composition de caoutchouc comprenant un composant de caoutchouc comportant de 0 à 50 % en masse d'un caoutchouc à base d'isoprène,

dans lequel la composition de caoutchouc satisfait aux conditions (1) à (3) suivantes :

(1) lorsqu'une tan $\delta$ à 30 °C (tan $\delta_{30\,°C}$), mesurée dans une condition de température à 30 °C, une contrainte initiale de 10 %, une contrainte dynamique de 2 %, et une fréquence de 10 Hz, est égale à A, $A \geq 0,12$,
(2) lorsqu'un ratio ($EB_{80°C}/EB_{23°C}$) d'une élongation à la rupture à 80 °C ($EB_{80\,°C}$) sur une élongation à la rupture à 23 °C ($EB_{23\,°C}$) est égale à B, $0,60 \leq B \leq 1,00$, et
(3) lorsqu'un indice de résistance à l'abrasion avec un pneumatique de l'exemple comparatif 1, tel qu'exposé dans la spécification, étant égal à 100, tel que mesuré par un testeur LAT dans une condition de charge de 40 N, un vitesse de 20 km/h, et un angle de glissement de 6 ° est égal à C, $110 \leq C \leq 140$,

dans lequel la bande de roulement a une partie en couronne et une paire de parties de flancs, la partie en couronne ayant le centre à l'équateur du pneumatique et ayant une largeur d'un 1/3 d'une largeur de surface au sol de la bande de roulement, chacune des parties de flancs de la paire étant située sur les deux côtés de la partie en couronne et ayant une largeur égale à 1/3 de la largeur de la surface de la bande de roulement, les largeurs des parties de flancs et de la partie en couronne sont déterminées dans un état normal où le pneumatique est assemblé à la jante, sur une jante normale, et une pression interne normale est appliquée, et aucune charge n'est appliquée, et
la partie en couronne et les parties de flancs satisfont à la condition (4) suivante :
(4) si un ratio (LANDsh/LANDcr) d'un ratio de surface en contact avec le sol de la paire complète des parties de flancs (LANDsh) sur un ratio de surface en contact avec le sol de la partie en couronne (LANDcr) est égal

à D, $0{,}80 \leq D \leq 2{,}00$,
dans lequel la bande de roulement possède au moins une rainure principale circonférentielle s'étendant de manière continue dans une direction circonférentielle de pneumatique, la rainure principale circonférentielle satisfaisant à la condition (5) suivante :
(5) lorsqu'une profondeur maximale de rainure de la rainure principale circonférentielle est égale à E (mm), $5 \leq E \leq 20$, et
dans lequel A, B, C, D et E satisfont à l'inégalité (6) suivante :
(6)

$$25 \leq (B \times C/A) \times (D/E) \leq 200.$$

2. Pneumatique selon la revendication 1, dans lequel le caoutchouc à base d'isoprène est un caoutchouc naturel.

3. Pneumatique selon la revendication 1 ou la revendication 2, dans lequel la composition de caoutchouc comprend de 20 à 70 parties en masse de silice sur la base de 100 parties en masse de composant de caoutchouc.

4. Pneumatique selon la revendication 3, dans lequel la silice a une aire de surface spécifique par adsorption d'azote de 200 $m^2/g$ ou plus.

5. Pneumatique selon l'une quelconque des revendications 1 à 4, dans lequel la composition de caoutchouc comprend de 10 à 30 parties en masse de noir de carbone sur la base de 100 parties en masse de composant de caoutchouc.

6. Pneumatique selon la revendication 5, dans lequel le noir de carbone a une aire de surface spécifique par adsorption d'azote de 120 à 200 $m^2/g$.

7. Pneumatique selon l'une quelconque des revendications 3 à 6, dans lequel la composition de caoutchouc comprend de 2 à 20 parties en masse d'un agent de couplage silane sur la base de 100 parties en masse de silice.

8. Pneumatique selon l'une quelconque des revendications 1 à 7, dans lequel la composition de caoutchouc comprend de 0,5 à 4,0 parties en masse d'un agent de réticulation hydrure sur la base de 100 parties en masse de composant de caoutchouc.

9. Pneumatique selon l'une quelconque des revendications 1 à 8, dans lequel D est égal à $0{,}90 < D < 1{,}08$.

10. Pneumatique selon l'une quelconque des revendications 1 à 9, dans lequel LANDsh est égal à 60 à 80.

11. Pneumatique selon l'une quelconque des revendications 1 à 10, dans lequel, parmi les parties de flancs, un LANDsh au pochoir correspond à un ratio de surface en contact avec le sol de la partie de flanc sur un côté où un marqueur convexe est placé sur une surface extérieure d'une paroi latérale et un LANDsh sans pochoir correspond à un ration de surface en contact avec le sol de l'autre partie de flanc sur le côté opposé, LANDsh au pochoir < LANDsh sans pochoir.

12. Pneumatique selon l'une quelconque des revendications 1 à 11, dans lequel la rainure principale circonférentielle a une forme en zigzag ou ondulée ayant une amplitude dans la direction de la largeur de pneumatique.

13. Pneumatique selon l'une quelconque des revendications 1 à 12, dans lequel la profondeur de rainure de la rainure principale circonférentielle est une profondeur correspondant à 50 à 80 % d'une distance à partir d'un point à la surface de la bande de roulement dans la partie de la rainure circonférentielle vers l'intérieur d'une direction radiale vers une extrémité de bande de roulement.

FIG. 1

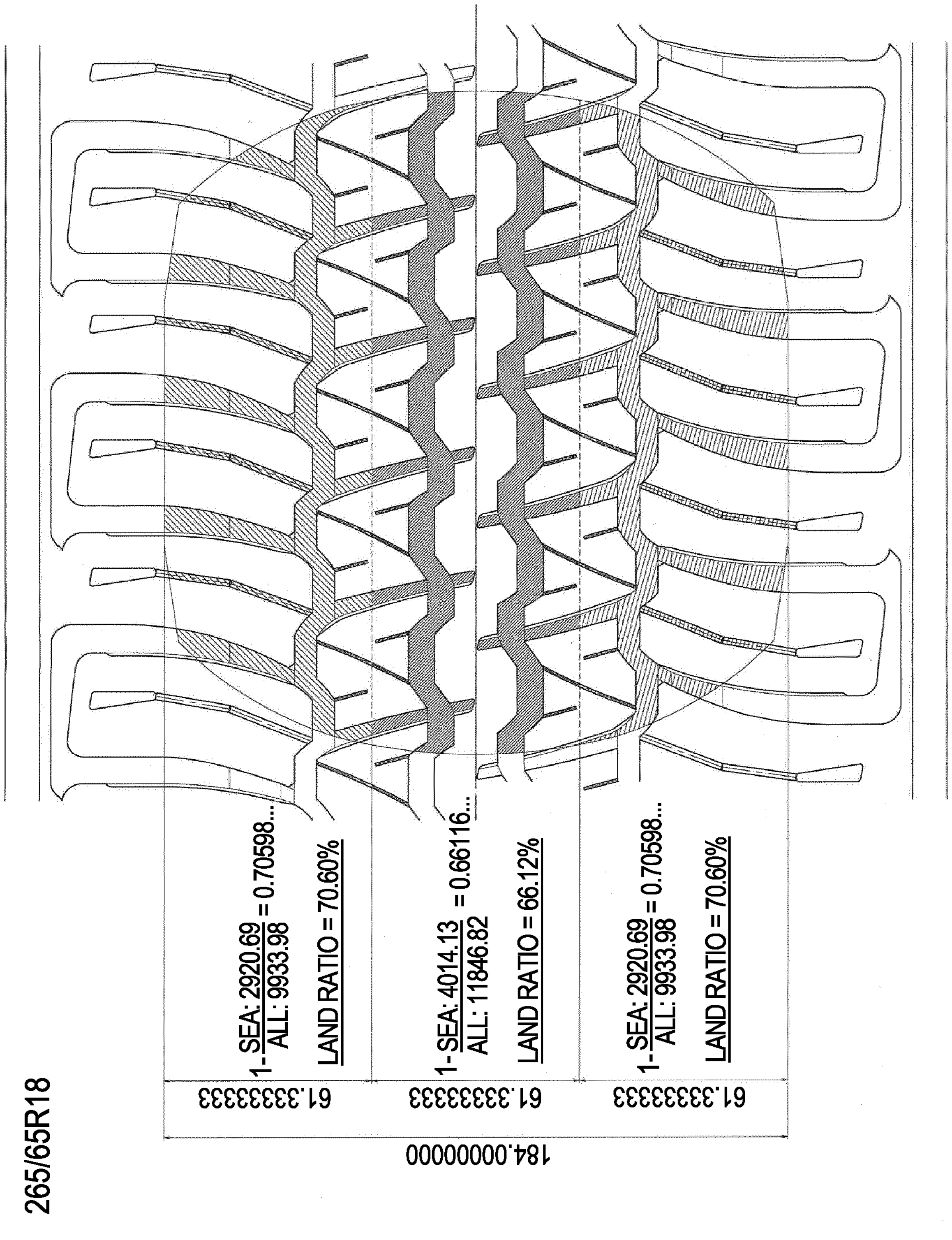
265/65R18
1-SEA: 2920.69 / ALL: 9933.98 = 0.70598...
LAND RATIO = 70.60%
1-SEA: 4014.13 / ALL: 11846.82 = 0.66116...
LAND RATIO = 66.12%
1-SEA: 2920.69 / ALL: 9933.98 = 0.70598...
LAND RATIO = 70.60%
61.3333333
61.3333333
61.3333333
184.0000000

FIG. 2

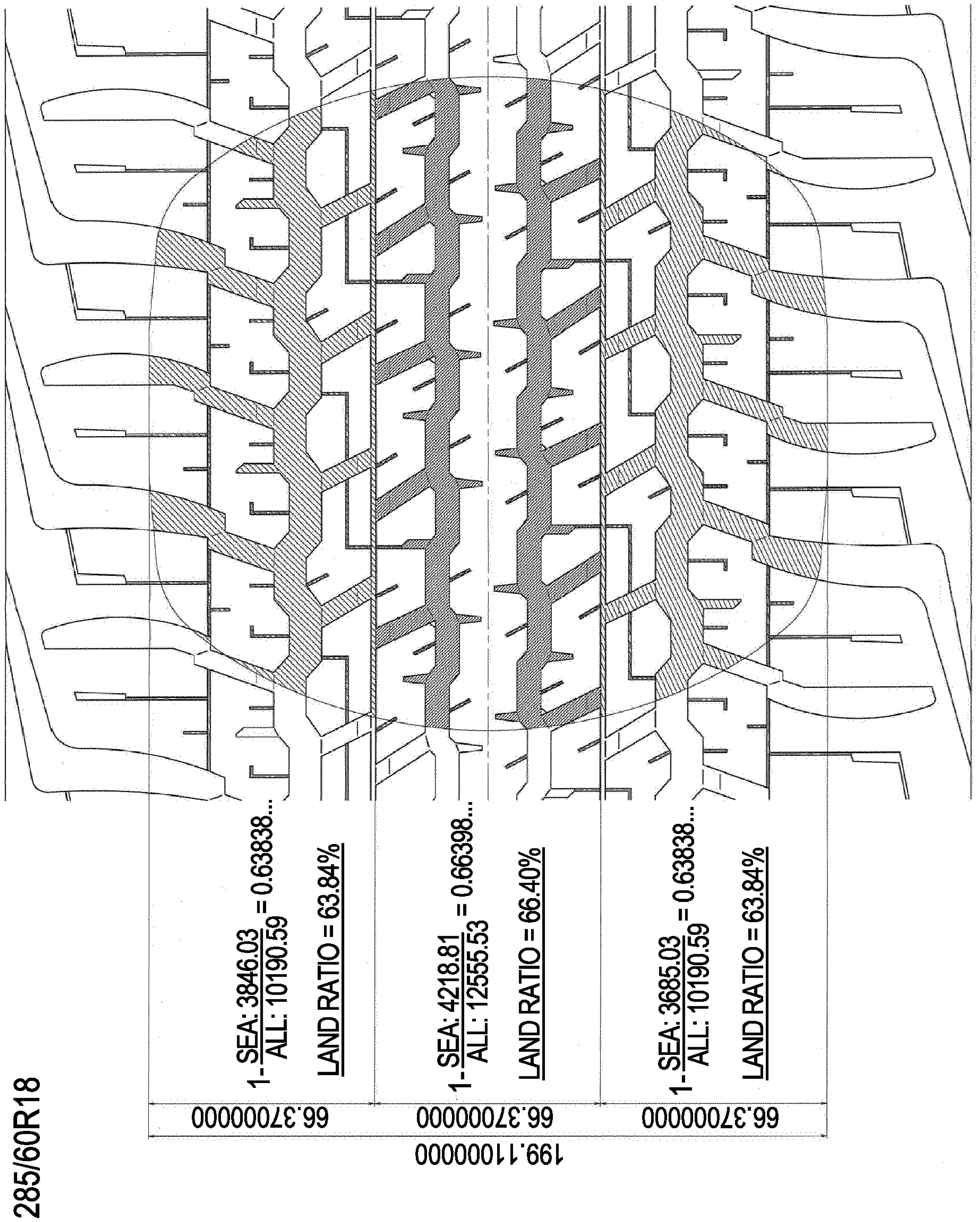
285/60R18
1 - SEA: 3846.03 / ALL: 10190.59 = 0.63838...
LAND RATIO = 63.84%
1 - SEA: 4218.81 / ALL: 12555.53 = 0.66398...
LAND RATIO = 66.40%
1 - SEA: 3685.03 / ALL: 10190.59 = 0.63838...
LAND RATIO = 63.84%
66.37000000
66.37000000
66.37000000
199.11000000

FIG. 3

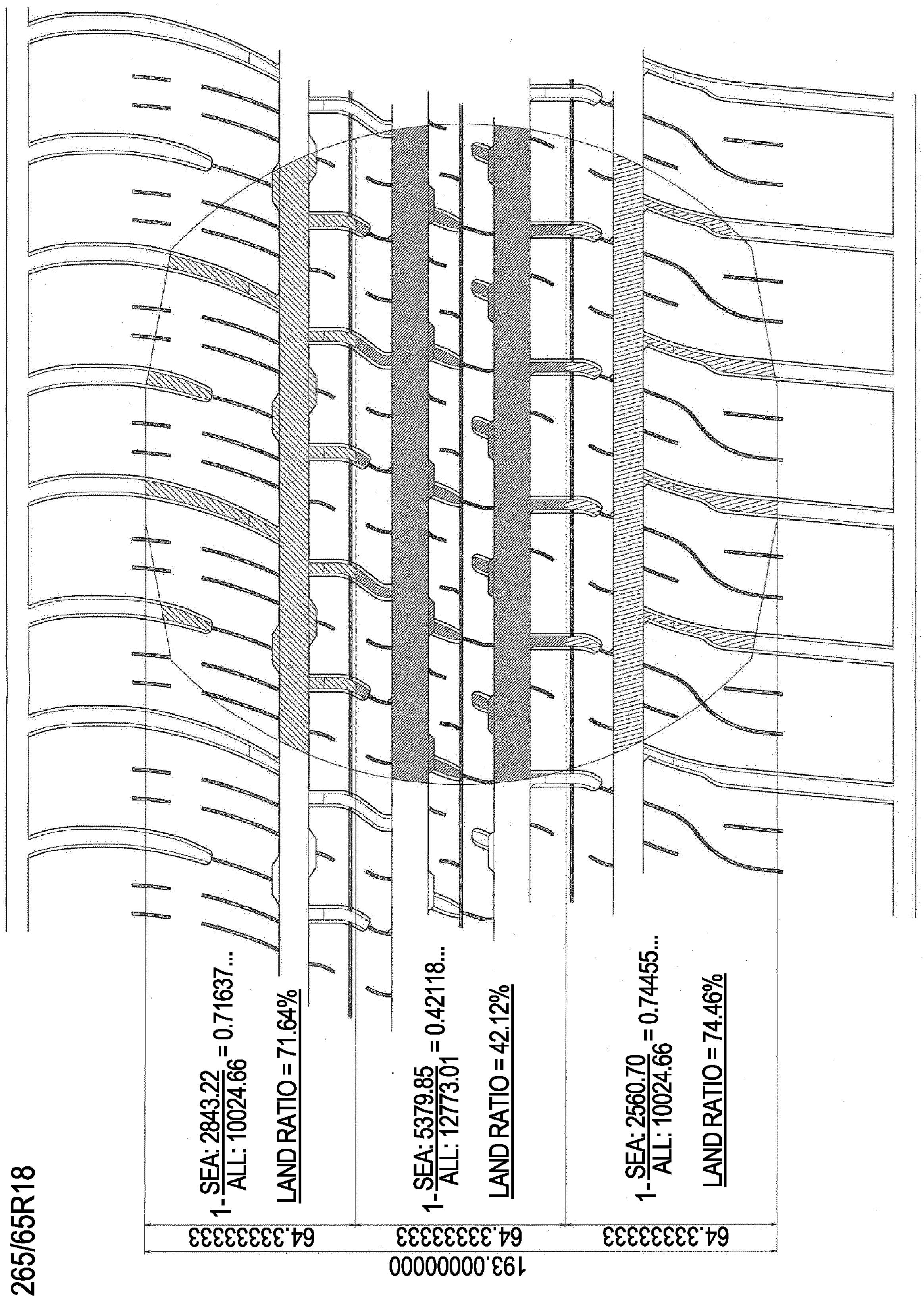

265/65R18
1-SEA: 2843.22 / ALL: 10024.66 = 0.71637...
LAND RATIO = 71.64%
1-SEA: 5379.85 / ALL: 12773.01 = 0.42118...
LAND RATIO = 42.12%
1-SEA: 2560.70 / ALL: 10024.66 = 0.74455...
LAND RATIO = 74.46%
64.33333333
64.33333333
64.33333333
193.0000000

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007056137 A
- US 20060231181 A1